(19) Europäisches Patentamt
European Patent Office
Office européen des brevets

(11) **EP 4 636 043 A1**

(12) **EUROPÄISCHE PATENTANMELDUNG**

(43) Veröffentlichungstag:
**22.10.2025 Patentblatt 2025/43**

(21) Anmeldenummer: **24171169.6**

(22) Anmeldetag: **18.04.2024**

(51) Internationale Patentklassifikation (IPC):
**C09D 5/02** *(2006.01)*

(52) Gemeinsame Patentklassifikation (CPC):
**C09D 5/028**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **STO SE & Co. KGaA**
**79780 Stühlingen (DE)**

(72) Erfinder:
• **Harprecht, Klaus**
**58455 Witten (DE)**

• **Bramesfeld, Susanne**
**42489 Wülfrath (DE)**
• **Engel, Christian**
**40878 Ratingen (DE)**
• **Danscheidt, Stefan**
**40822 Mettmann (DE)**
• **Rose, Ingo**
**44791 Bochum (DE)**

(74) Vertreter: **Gottschalk, Matthias**
**Gottschalk Maiwald**
**Patentanwalts- und Rechtsanwalts- (Schweiz) GmbH**
**Florastrasse 14**
**8008 Zürich (CH)**

(54) **ZUSAMMENSETZUNG ZUR AUSBILDUNG EINER BESCHICHTUNG, BESCHICHTUNG**

(57) Die Erfindung betrifft eine Zusammensetzung zur Ausbildung einer Beschichtung, insbesondere einer Farbbeschichtung für den Innenbereich, enthaltend
- mindestens ein organisches Polymerbindemittel,
- eine Füllstoffkombination,
- Farb- und/oder Weißpigmente und
- Wasser,
wobei die Füllstoffkombination (a) erste Füllstoffe (A) mit einer Ölzahl nach DIN EN ISO 787-5 unter 100g/100g und zweite Füllstoffe (B) mit einer Ölzahl nach DIN EN ISO 787-5 über 100g/100g enthält und (b) eine mittlere Gesamt-Ölzahl von über 50g/100g, vorzugsweise über 60g/100g, weiterhin vorzugsweise über 70g/100g, aufweist, und wobei die ersten Füllstoffe (A) länglich geformte Füllstoffpartikel mit einem Aspektverhältnis nach ISO 13322-2:2021 von mindestens 1:3, vorzugsweise von mindestens 1:4, weiterhin vorzugsweise von mindestens 1:5, enthalten.

Die Erfindung betrifft ferner eine aus einer erfindungsgemäßen Zusammensetzung ausgebildete Beschichtung, insbesondere Farbbeschichtung.

EP 4 636 043 A1

**Beschreibung**

Die Erfindung betrifft eine Zusammensetzung zur Ausbildung einer Beschichtung, insbesondere einer Farbbeschichtung für den Innenbereich. Darüber hinaus betrifft die Erfindung eine aus einer erfindungsgemäßen Zusammensetzung ausgebildete Beschichtung, insbesondere Farbbeschichtung.

Stand der Technik

Farbbeschichtungen im Innenbereich werden in der Regel in zwei Schichten bzw. Lagen aufgebracht. Demzufolge sind mindestens zwei Arbeitsgänge notwendig, um die Farbbeschichtung auszubilden. Pro Schicht bzw. Lage werden dabei ca. 150 mL/m$^2$ einer Innenfarbe verbraucht. Um Zeit und Material einzusparen, kann die Innenfarbe in nur einer Schicht bzw. Lage aufgebracht werden. Das Aufbringen einer Innenfarbe in nur einer Schicht bzw. Lage erfordert jedoch einen erhöhten Arbeitsaufwand, da besonders sorgfältig gearbeitet werden muss, um einen gleichmäßigen und damit deckenden Auftrag zu gewährleisten. Denn in Ermangelung einer weiteren Schicht bzw. Lage fehlt es an einer Korrekturmöglichkeit. Zudem muss darauf geachtet werden, dass die Innenfarbe nicht zu dick aufgebracht wird. Denn bereits bei einem Auftrag von ca. 200 mL/m$^2$ kann es beim Trocknen der Farbbeschichtung zu Spannungsrissen kommen. Die Gefahr der Ausbildung von Spannungsrissen ist insbesondere dort besonders hoch, wo die Innenfarbe regelmäßig zu dick aufgebracht wird. Dies ist beispielsweise der Fall bei Flächenrändern sowie in Innenecken, da es hier häufig zu einem überlappenden Auftrag und damit zu einer Überschichtdicke der Farbbeschichtung kommt.

Das Phänomen der Rissbildung während der Trocknungsphase einer Innenfarbe wird in der Fachliteratur als Filmrissbildung oder "Mud Cracking" bezeichnet. Sie ist zu unterscheiden von der Rissbildung, die nach Bewitterung und/oder Alterung auftreten kann. Des Weiteren sind Maßnahmen bekannt, um die Filmrissbildungsneigung einer Beschichtungszusammensetzung zu verringern.

Zur Verringerung der Filmrissbildungsneigung einer Beschichtungszusammensetzung kann beispielsweise der Bindemittelanteil erhöht werden. In der Regel sind Beschichtungs- bzw. Farbzusammensetzungen für den Innenbereich bindemittelarm eingestellt, das heißt, dass ihre Pigment-Volumen-Konzentration (PVK) über der kritischen PVK (KPVK) liegt bzw. die Zusammensetzungen überkritisch formuliert sind. Die KPVK definiert den Punkt, an dem alle Füllstoff- und Pigmentpartikel gerade noch von Bindemittel umgeben sind. Im überkritischen Bereich reicht der Bindemittelgehalt nicht mehr aus, um alle Füllstoff- und Pigmentpartikel zu umhüllen. Derartige Zusammensetzungen weisen daher eine hohe Filmrissbildungsneigung auf. Durch Erhöhen des Bindemittelanteils kann der Zusammenhalt der Füllstoff- und Pigmentpartikel während der Trocknungsphase verbessert werden, so dass die Filmrissbildungsneigung abnimmt. Allerdings steigt mit dem Bindemittelgehalt der Glanzgrad einer aus der Zusammensetzung hergestellten Farbbeschichtung, so dass matte Farbbeschichtungen nicht realisierbar sind.

Zur Verringerung der Filmrissbildungsneigung können der Zusammensetzung auch Filmbildehilfsmittel zugegeben werden. Diese elastifizieren die Zusammensetzung, so dass während der Trocknungsphase auftretende Spannungen besser aufgenommen werden können. Für Zusammensetzungen, die im Innenbereich zur Anwendung gelangen, stellt dies jedoch keine akzeptable Lösung dar, da die Zugabe von Filmbildehilfsmitteln eine Deklaration der Zusammensetzung als emissionsarm bzw. lösemittel- und weichmacherfrei verhindert.

Eine weitere Maßnahme zur Verringerung der Filmrissbildungsneigung stellt die Zugabe von Armierungsfasern dar. Nachteilig hieran ist jedoch, dass diese die Verarbeitungseigenschaften der Zusammensetzung in nicht unerheblichem Maße beeinträchtigen.

Die vorliegende Erfindung ist mit der Aufgabe befasst, eine Zusammensetzung zur Ausbildung einer Beschichtung, insbesondere einer Farbbeschichtung für den Innenbereich, anzugeben, welche bei zugleich guten Verarbeitungseigenschaften eine geringe Filmrissbildungsneigung aufweist. Dadurch soll eine Zusammensetzung geschaffen werden, die bei nur einschichtigem bzw. einlagigem Auftrag sicher appliziert werden kann. Eine aus der Zusammensetzung ausgebildete Beschichtung, insbesondere Farbbeschichtung, soll zudem eine niedrige Oberflächenempfindlichkeit sowie einen niedrigen Glanzgrad aufweisen.

Zur Lösung der Aufgabe wird die Zusammensetzung mit den Merkmalen des Anspruchs 1 vorgeschlagen. Vorteilhafte Weiterbildungen der Erfindung sind den Unteransprüchen zu entnehmen. Darüber hinaus wird eine aus einer erfindungsgemäßen Zusammensetzung ausgebildete Beschichtung angegeben.

Offenbarung der Erfindung

Vorgeschlagen wird eine Zusammensetzung zur Ausbildung einer Beschichtung, insbesondere einer Farbbeschichtung für den Innenbereich, enthaltend

- mindestens ein organisches Polymerbindemittel,
- eine Füllstoffkombination,

- Farb- und/oder Weißpigmente und

- Wasser,

wobei die Füllstoffkombination (a) erste Füllstoffe (A) mit einer Ölzahl nach DIN EN ISO 787-5 unter 100g/100g und zweite Füllstoffe (B) mit einer Ölzahl nach DIN EN ISO 787-5 über 100g/100g enthält und (b) eine mittlere Gesamt-Ölzahl von über 50g/100g, vorzugsweise über 60g/100g, weiterhin vorzugsweise über 70g/100g, aufweist, und wobei die ersten Füllstoffe (A) länglich geformte Füllstoffpartikel mit einem Aspektverhältnis nach ISO 13322-2:2021 von mindestens 1:3, vorzugsweise von mindestens 1:4, weiterhin vorzugsweise von mindestens 1:5, enthalten.

Das Aspektverhältnis nach ISO 13322-2:2021 beschreibt das Seitenverhältnis des kleinsten Feret-Durchmessers $xF_{min,i}$ zum größten Feret-Durchmesser $xF_{max,i}$, wobei der Feret-Durchmesser ein Maß für die Größe eines Objekts entlang einer bestimmten Richtung ist. Im Allgemeinen kann er als der Abstand zwischen zwei parallelen Ebenen definiert werden, die das Objekt senkrecht auf diese Richtung beschränken. Der Feret-Durchmesser wird insbesondere bei der Analyse der Größe und der Verteilung von Partikeln verwendet, die beispielsweise pulverförmig oder polykristallin sind.

Ein Füllstoffpartikel mit einem Aspektverhältnis von mindestens 1:3, vorzugsweise von mindestens 1:4, weiterhin vorzugsweise von mindestens 1:5, weist eine eindeutig längliche Form auf und kann demnach auch als nadelförmig, stäbchenförmig oder skalenoedrisch bezeichnet werden. Der Einfachheit halber wird nachfolgend einheitlich der Begriff "nadelförmig" für alle in den ersten Füllstoffen A enthaltenen Füllstoffpartikel mit einem entsprechenden Aspektverhältnis verwendet. Der Begriff "nadelförmig" schließt somit auch stäbchenförmige und skalenoedrische Füllstoffpartikel mit ein.

In der vorgeschlagenen Zusammensetzung haben die nadelförmigen Füllstoffpartikel eine armierende Wirkung, die ähnlich der armierenden Wirkung von Fasern ist. Im Unterschied zu Fasern wirkt sich die Zugabe nadelförmiger Füllstoffpartikel jedoch nicht negativ auf die Verarbeitungseigenschaften der Zusammensetzung aus. Mit Hilfe der nadelförmigen Füllstoffe kann demnach eine Armierung bewirkt werden, welche die Filmrissbildungsneigung einer aus der Zusammensetzung ausgebildeten Beschichtung herabsetzt, ohne gleichzeitig die Verarbeitungseigenschaften der Zusammensetzung zu beeinträchtigen. Um zu verhindern, dass die nadelförmigen Füllstoffpartikel die Verarbeitungseigenschaften der Zusammensetzung negativ beeinflussen, sollte das Aspektverhältnis der nadelförmigen Füllstoffpartikel nicht größer als 1:20, vorzugsweise 1: 15, weiterhin vorzugsweise 1:10 sein.

Eine weitere Herabsetzung der Filmrissbildungsneigung wird bei der angegebenen Zusammensetzung dadurch erreicht, dass die Füllstoffkombination erste Füllstoffe (A) mit einer Ölzahl nach DIN EN ISO 787-5 unter 100g/100g und zweite Füllstoffe (B) mit einer Ölzahl nach DIN EN ISO 787-5 über 100g/100g enthält. Die Ölzahl (ÖZ) eines Füllstoffs enthält Informationen über das Oberflächen-Volumenverhältnis und damit über die Morphologie seiner Füllstoffpartikel. Im Fachlexikon, "Putze und Beschichtungen", wird die Ölzahl wie folgt beschrieben:

Nach DIN EN ISO 787-5 versteht man unter der Ölzahl diejenige Menge an tropfenweise zugegebenem Lackleinöl einer festgelegten Säurezahl, die 100 g Pigment oder Füllstoff beim Kneten mit einem Spatel bis zum Erreichen einer zusammenhängenden, kittartig-steifen Paste absorbiert ("Netzpunkt").

Die Ölzahl eines Füllstoffs korreliert mit der spezifischen Oberfläche der einzelnen Füllstoffpartikel. Die spezifische Oberfläche wiederum wird durch die Größe und die Morphologie der Füllstoffpartikel bestimmt. Längliche oder lamellare Füllstoffpartikel weisen in der Regel eine größere spezifische Oberfläche und damit eine höhere Ölzahl als rundlich-kompakte Füllstoffpartikel auf.

Aus den unterschiedlichen Ölzahlen der Füllstoffe (A) und der Füllstoffe (B) der in der Zusammensetzung enthaltenen Füllstoffkombination kann demnach abgeleitet werden, dass morphologisch divergente Füllstoffe verwendet werden. Das heißt, dass die Füllstoffkombination der Zusammensetzung mindestens zwei Füllstoffe enthält, die sich hinsichtlich ihrer Morphologie unterscheiden. Die Verwendung morphologisch divergente Füllstoffe fördert die Ausbildung von Lücken zwischen den Füllstoffpartikeln, da diese weniger dicht gepackt werden können. Je unterschiedlicher und/oder unregelmäßiger die Form der Füllstoffe ist, desto größer sind diese Lücken. Angestrebt werden möglichst große Lücken, um diese mit Bindemittel füllen zu können. Denn das Bindemittel verbessert den Zusammenhalt der Füllstoffpartikel untereinander, so dass - wie eingangs bereits erwähnt - die Filmrissbildungsneigung abnimmt und zugleich die Widerstandsfähigkeit einer aus der Zusammensetzung hergestellten Beschichtung steigt.

Dank der zwischen den Füllstoffpartikeln verbleibenden großen Lücken, kann der Bindemittelanteil erhöht werden, ohne dass zugleich der Glanzgrad einer aus der Zusammensetzung ausgebildeten Beschichtung steigt. Denn aufgrund der großen Lücken reichert sich das Bindemittel dort und nicht auf der Oberfläche der Beschichtung an. Mit anderen Worten: es "versteckt" sich in den Lücken. Somit bleibt eine Mikrostruktur der Oberfläche erhalten, die das einfallende Licht streut und die Oberfläche matt erscheinen lässt.

Die ferner angegebene mittlere Gesamt-Ölzahl der Füllstoffkombination ist ein weiterer Beleg dafür, dass die vorgeschlagene Zusammensetzung einen erhöhten Bindemittelanteil aufweist. Denn mit der mittleren Gesamt-Ölzahl der Füllstoffkombination steigt zugleich der Bindemittelbedarf der Zusammensetzung. Die mittlere Gesamt-Ölzahl der Füllstoffkombination, das heißt aller enthaltenen Füllstoffe (FS), berechnet sich wie folgt:

(prozentulaer Anteil FS1 * ÖZ FS1) + (prozentualer Anteil FS2 * ÖZ FS2) + (prozuntualer Anteil FSn * ÖZ FSn) = mittlere Gesamt-ÖZ

Alternativ kann die mittlere Gesamt-Ölzahl aller Füllstoffe auch experimentell bestimmt werden, indem die Füllstoffkombination zur Bestimmung der Ölzahl nach DIN EN ISO 787-5 herangezogen wird.

Eine für den Bindemittelanteil der Zusammensetzung weitere relevante Kenngröße ist die Pigment-Volumen-Konzentration (PVK). Die PVK bezeichnet das Verhältnis des Volumens der enthaltenen Pigmente und Füllstoffe zum Gesamtvolumen an nichtflüchtigen Bestandteilen, in der Regel Pigmente, Füllstoffe und Bindemittel. Sie ist demnach eine wesentliche Größe zur Charakterisierung des Volumenverhältnisses von Pigment und Füllstoff zum Bindemittel. Je niedriger die PVK ist, desto höher ist in der Regel der Bindemittelanteil. Für die Bestimmung der PVK kann Rückgriff auf die DIN EN ISO 4618:2015-01 genommen werden. Zur Berechnung der PVK kann die folgende Formel verwendet werden:

$$\text{PVK [\%]} = \left( \sum V_{\text{Pigmente}} + \sum V_{\text{Füllstoffe}} \Big/ \sum V_{\text{Pigmente}} + \sum V_{\text{Füllstoffe}} + \sum V_{\text{Bindemittel}} \right) \text{x } 100$$

In diesem Zusammenhang kommt die kritische Pigment-Volumen-Konzentration KPVK ins Spiel. In der DIN EN ISO 4618:2015-01 wird die KPVK als ein bestimmter Wert der PVK definiert, bei dem die Lücken zwischen den sich berührenden Feststoffpartikel einer Beschichtung gerade noch mit Bindemittel gefüllt sind. Oberhalb der KPVK (überkritischer Bereich) sind demnach die Lücken nicht mehr vollständig mit Bindemittel gefüllt. Unterhalb der KPVK (unterkritischer Bereich), sind alle Lücken vollständig mit Bindemittel gefüllt.

Vorliegend wird eine bindemittelreiche, unterkritische Formulierung angestrebt, so dass alle Lücken mit Bindemittel gefüllt und die Füllstoffe im Bindemittel fest eingebunden sind. Die Filmrissbildungsneigung einer aus der Zusammensetzung ausgebildeten Beschichtung wird dadurch herabgesetzt. Bevorzugt beträgt daher die Pigment-Volumen-Konzentration (PVK) der vorgeschlagenen Zusammensetzung zwischen 40% und 70%, vorzugsweise zwischen 45% und 70%, weiterhin vorzugsweise zwischen 50% und 65%.

Um die gewünschte lückenhafte Packung der Füllstoffe in der Zusammensetzung zu erzielen, weisen bevorzugt die ersten Füllstoffe (A) eine Ölzahl nach DIN EN ISO 787-5 auf, die 30 bis 90g/100g, vorzugsweise 35 bis 80g/100g, weiterhin vorzugsweise 40 bis 75g/100g, beträgt. Des Weiteren bevorzugt weisen die zweiten Füllstoffe (B) eine Ölzahl nach DIN EN ISO 787-5 auf, die 110 bis 250g/100g, vorzugsweise 110 bis 200g/100g, beträgt.

Eine möglichst lückenhafte Packung der Füllstoffe wird erreicht, wenn Füllstoffpartikel eingesetzt werden, die sich nicht nur hinsichtlich ihrer Morphologie, sondern auch hinsichtlich ihrer Größe unterscheiden. Die Größe kann durch den D50-Wert angegeben werden. Die mittlere Partikelgröße D50, auch D50-Wert oder Medianwert genannt, gibt die mittlere Partikelgröße eines Füllstoffs an, so dass der Anteil der Partikel, die größer als der D50-Wert sind, gleich dem Anteil der Partikel ist, die kleiner als der D50-Wert sind. Die Bestimmung dieser Werte erfolgt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/- durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden.

Hinsichtlich der in den ersten Füllstoffen (A) enthaltenen länglich geformten bzw. nadelförmigen Füllstoffpartikel ist der D50-Wert wenig aussagekräftig. [SS1]Die Größe der in den ersten Füllstoffen (A) enthaltenen länglich geformten Füllstoffpartikel wird daher anhand ihrer Länge bzw. ihres maximalen Feret-Durchmessers sowie ihrer Breite bzw. ihres minimalen Feret-Durchmessers angegeben. Bevorzugt weisen die in den ersten Füllstoffen (A) enthaltenen länglich geformten Füllstoffpartikel einen maximalen Feret-Durchmesser von 40 bis 200 $\mu$m, vorzugsweise von 60 bis 160 $\mu$m, weiterhin vorzugsweise von 80 bis 120 $\mu$m, sowie einen minimalen Feret-Durchmesser von 4 bis 30 $\mu$m, vorzugsweise von 5 bis 26 $\mu$m, weiterhin vorzugsweise von 6 bis 22 $\mu$m, auf.

Die darüber hinaus in den ersten Füllstoffen (A) enthaltenen Füllstoffe weisen eine mittlere Partikelgröße (D50) von 1 bis 30 $\mu$m, vorzugsweise von 2 bis 25 $\mu$m, weiterhin vorzugsweise von 3 bis 20 $\mu$m, auf. Die zweiten Füllstoffe (B) weisen eine mittlere Partikelgröße (D50) von 5 bis 100 $\mu$m, vorzugsweise von 10 bis 80 $\mu$m, weiterhin vorzugsweise von 12 bis 75 $\mu$m, auf.

Des Weiteren wird vorgeschlagen, dass die Füllstoffkombination karbonatische Füllstoffe und/oder silikatische Füllstoffe als erste Füllstoffe (A) und/oder zweite Füllstoffe (B) enthält. Bei den karbonatischen Füllstoffen kann es sich beispielsweise um Kalziumkarbonate, Kalkstein, Marmor und/oder Dolomit handeln. Als silikatische Füllstoffe kommen beispielsweise Quarz, Glimmer, Cristobalit, Feldspäte, Schichtsilikate, Talkum, Kaolin und/oder Kieselerden, wie beispielsweise Kieselgur und/oder Diatomeen, in Frage.

Die ersten Füllstoffe (A) und die zweiten Füllstoffe (B) können demnach Füllstoffe der gleichen Art, das heißt der gleichen chemischen Zusammensetzung enthalten, so dass sie sich lediglich im Hinblick auf die Morphologie und ggf. die Partikelgröße ihrer Füllstoffpartikel unterscheiden. Bevorzugt wird bzw. werden für die ersten Füllstoffe (A) und/oder die zweiten Füllstoffe (B) eine Kombination aus zwei oder mehr Füllstoffarten eingesetzt. Ferner bevorzugt sind die Füllstoffpartikel der Kombination aus zwei oder mehr Füllstoffarten morphologisch divergent.

Hinsichtlich der in den ersten Füllstoffen (A) enthaltenen länglich geformten bzw. nadelförmigen Füllstoffpartikel kann es sich ebenfalls um karbonatische und/oder silikatische Füllstoffe handeln. Aufgrund des angegebenen Aspektverhältnisses kommen insbesondere Kalziumkarbonate, beispielsweise Aragonit und/oder gefälltes Kalziumkarbonat (PCC) als karbonatische Füllstoffe sowie Kalziumsilikate, Bandsilikate, Kettensilikate, Wollastonit und/oder Tremolit als silikatische Füllstoffe in Frage. Besonders bevorzugt werden Wollastonit und/oder Tremolit eingesetzt.

Gemäß einer bevorzugten Ausführungsform der Erfindung enthalten die zweiten Füllstoffe (B) der Füllstoffkombination mindestens ein anorganisches Mattierungsmittel. Bei dem anorganischen Mattierungsmittel handelt es sich demnach um einen Füllstoff mit einer Ölzahl > 100g/100g. Durch Zugabe des Mattierungsmittels kann der Glanzgrad einer aus der Zusammensetzung ausgebildeten Beschichtung weiter herabgesetzt werden. Aus ökologischen Gründen werden vorzugsweise nur anorganische Mattierungsmittel verwendet.

Bevorzugt enthält die Zusammensetzung 4,0 bis 35,0 Gew.-%, vorzugsweise 6,0 bis 28,0 Gew.-%, weiterhin vorzugsweise 8,0 bis 22,0 Gew.-% an ersten Füllstoffen (A) und 1,0 bis 25,0 Gew.-%, vorzugsweise 2,0 bis 20,0 Gew.-%, weiterhin vorzugsweise 4,0 bis 15,0 Gew.-% an zweiten Füllstoffen (B), jeweils bezogen auf das Gesamtgewicht der Ausgangsstoffe. Von den enthaltenen ersten Füllstoffen (A) sind bevorzugt 2 bis 15 Gew.-%, vorzugsweise 3 bis 12 Gew.-%, weiterhin vorzugsweise 4 bis 10 Gew.-% bezogen auf das Gesamtgewicht der Ausgangsstoffe länglich geformte Füllstoffpartikel mit einem Aspektverhältnis von mindestens 1:3, vorzugsweise von mindestens 1:4, weiterhin vorzugsweise von mindestens 1:5.

Ferner bevorzugt enthalten die ersten Füllstoffe (A) mindestens 40%, vorzugsweise mindestens 45%, weiterhin vorzugsweise mindestens 50% länglich geformte Füllstoffpartikel mit einem Aspektverhältnis nach ISO 13322-2:2021 von mindestens 1:3, vorzugsweise von mindestens 1:4, weiterhin vorzugsweise von mindestens 1:5. Weiterhin wird vorgeschlagen, dass die Zusammensetzung 4,0 bis 20,0 Gew.-%, vorzugsweise 5,0 bis 18,0 Gew.-%, weiterhin vorzugsweise 6,0 bis 15,0 Gew.-%, organisches Polymerbindemittel bezogen auf das Gesamtgewicht der Ausgangsstoffe enthält.

Bevorzugt enthält die Zusammensetzung mindestens ein organisches Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate, umfassend Homo- oder Copolymere von Acrylaten und/oder Methacrylaten, gegebenenfalls mit Acryl- und/oder Methacrylsäure als Comonomerbaustein. Besonders bevorzugt sind Copolymere aus Vinylacetat-Ethylen, Acrylsäureester-Acrylnitril, Acryl- /Methacrylsäureester, Styrol-Butylacrylat sowie Acrylat-Homopolymer enthalten.

Vorteilhafterweise ist das mindestens eine Polymerbindemittel eine wässrige Polymerdispersion mit einem Feststoffanteil von 30-65 Gew.-%, vorzugsweise 40-62 Gew.-%, weiterhin vorzugsweise 45-62 Gew.-%, bezogen auf das Gesamtgewicht der Polymerdispersion. Die Verwendung einer Polymerdispersion erleichtert die Herstellung der Zusammensetzung.

Darüber hinaus können in der vorgeschlagenen Zusammensetzung rheologische Additive, Verdicker, Topf- und Filmkonservierungsmittel, Biozide, Entschäumer, Netz- und Dispergiermittel und/oder pH-Einsteller als Additive enthalten sein. Über die Additive können die Verarbeitungseigenschaften der Zusammensetzung weiter verbessert werden.

Bevorzugt sind in einer erfindungsgemäßen Zusammensetzung enthalten:

| | |
|---|---|
| 4-20 Gew.-% | organisches Polymerbindemittel (Feststoffanteil) |
| 4-35 Gew.-% | erste Füllstoffe (A) mit einer Ölzahl < 100, von denen mindestens 50% länglich geformte bzw. nadelförmige Füllstoffpartikel mit einem Aspektverhältnis von mindestens 1:3 sind, |
| 1-25 Gew.-% | zweite Füllstoffe (B) mit einer Ölzahl > 100 |
| 1-25 Gew.-% | Weiß- und/oder Farbpigmente |
| 0,01-5,0 Gew.-% | weitere Additive |
| 20-60 Gew.-% | Wasser |

und zwar jeweils bezogen auf das Gesamtgewicht der Ausgangsstoffe.

Die vorgeschlagene Zusammensetzung ist insbesondere zur Ausbildung einer Farbbeschichtung für den Innenbereich geeignet. Gegenüber einer herkömmlichen Innenfarben weist eine aus der erfindungsgemäßen Zusammensetzung hergestellte Farbbeschichtung eine geringe Neigung zur Filmrissbildung auf, was insbesondere auf die enthaltenen nadelförmigen Füllstoffe sowie auf den hohen Bindemittelanteil zurückzuführen ist. Der hohe Bindemittelanteil führt zudem zu einer hohen Widerstandsfähigkeit der Farbbeschichtung. Darüber hinaus können - trotz des hohen Bindemittelanteils - matte Farbbeschichtungen ausgebildet werden.

Da die Vorteile einer erfindungsgemäßen Zusammensetzung insbesondere bei einer hieraus ausgebildeten Beschichtung zu Tage treten, wird ferner eine Beschichtung, insbesondere eine Farbbeschichtung, aus einer erfindungsgemäßen Zusammensetzung vorgeschlagen. Die Beschichtung, insbesondere bei einschichtigem bzw. einlagigem Auftrag, weist aufgrund der erfindungsgemäßen Zusammensetzung eine geringe Filmrissbildungsneigung auf. Das heißt, dass beim Auftragen der Zusammensetzung die Filmdicke erhöht werden kann, ohne dass es beim Trocknen der Zusammensetzung zu einer Rissbildung kommt. In Versuchen konnte beispielsweise die Filmdicke von ca. 200 $\mu$m auf 650-700 $\mu$m erhöht werden. Die Bestimmung erfolgte dabei mittels Keilaufzug von 0 - 1000 $\mu$m. Die "kritische Rissbildungs-Schichtstärke" konnte somit um den Faktor 3 bis 3,5 erhöht werden.

Die Vorteile einer erfindungsgemäßen Zusammensetzung bzw. einer hieraus ausgebildeten Beschichtung werden nachfolgend anhand eines konkreten Ausführungsbeispiels aufgezeigt. Das Ausführungsbeispiel dient insbesondere der Ausbildung einer Farbbeschichtung für den Innenbereich.

Ausführungsbeispiel

| | |
|---|---|
| 19,0 Gew.-% | Polymerdispersion (Feststoffanteil ca. 50%) |
| 13,0 Gew.-% | Erste Füllstoffe (A), davon |
| | 6,0 Gew.-% silikatische Füllstoffe (ÖZ =48, D50-Wert = 3 $\mu$m) und |
| | 7,0 Gew.-% silikatische und/oder karbonatische Füllstoffe (ÖZ = 55), deren Partikel ein Aspektverhältnis von mindestens 1:5 aufweisen, |
| 11,0 Gew.-% | Zweite Füllstoffe (B), davon |
| | 3,0 Gew.-% silikatische Füllstoffe (ÖZ = 110, D50-Wert = 44 $\mu$m und |
| | 8,0 Gew.-% anorganisches Mattierungsmittel (ÖZ = 160, D50-Wert = 16 $\mu$m |
| 22,0 Gew.-% | Weißpigment Rutil |
| 5,0 Gew.-% | weitere Additive (Rheologieadditive, Entschäumer, Konservierungsmittel u.a.) |
| 30,0 Gew.-% | Wasser |
| 100,0 Gew.-% | |

Zur Herstellung der Zusammensetzung wurden alle Ausgangsstoffe homogen gemischt. Die hergestellte Zusammensetzung wies eine PVK von 60% auf. Die mittlere Gesamt-Ölzahl aller enthaltenen Füllstoffe betrug 95,1. Die mittlere Gesamt-Ölzahl wurde wie folgt berechnet:

Bezogen auf die Gesamtheit aller Füllstoffe (inklusive anorganischer Mattierungsmittel, jedoch ohne Pigmente) sind 25,0 Gew.-% silikatische Füllstoffe (ÖZ = 48), 29,2 Gew.-% silikatische und/oder karbonatische Füllstoffe (ÖZ = 55), 12,5 Gew.-% silikatische Füllstoffe (ÖZ = 110) sowie 33,3 Gew.-% anorganisches Mattierungsmittel (ÖZ = 160) enthalten. Dies ergibt folgende Gleichung:

$$\rightarrow (0{,}25 * 48) + (0{,}292 * 55) + (0{,}125 * 110) + (0{,}333 * 160) = 95{,}1$$

Die Bildung von Trockenspannungsrissen erfolgte erste bei einer Filmschichtstarke von etwa 650 bis 700 $\mu$m.

Ein Liter der Zusammensetzung ergaben etwa 8 m$^2$ Beschichtung, die zudem ein hohes Deckvermögen aufwies (H10-Klasse 1 > 99,5).

Die Beschichtung wies zudem eine Nassabriebfestigkeit der Nassabriebklasse 1 auf. Das heißt, dass die Beschichtung abwaschbar war. Die Nassabriebklasse wurde nach der Norm DIN EN ISO 11998:2006-10 in Verbindung mit der Norm DIN EN 13300 (November 2002) ermittelt.

Ferner wies die Beschichtung einen Glanzgrad < 10 GU auf. Das heißt, dass die Beschichtung nach der DIN EN 13300 (Ausgabe 11.2002) als "matt" oder "stumpfmatt" eingestuft werden konnte. Der Glanzgrad wurde nach der DIN EN ISO 2813:2014 (Ausgabedatum 11.2002) bei einem Messwinkel von 85° ermittelt.

**Patentansprüche**

1. Zusammensetzung zur Ausbildung einer Beschichtung, insbesondere einer Farbbeschichtung für den Innenbereich, enthaltend

- mindestens ein organisches Polymerbindemittel,
- eine Füllstoffkombination,
- Farb- und/oder Weißpigmente und
- Wasser,

wobei die Füllstoffkombination (a) erste Füllstoffe (A) mit einer Ölzahl nach DIN EN ISO 787-5 unter 100g/100g und zweite Füllstoffe (B) mit einer Ölzahl nach DIN EN ISO 787-5 über 100g/100g enthält und (b) eine mittlere Gesamt-Ölzahl von über 50g/100g, vorzugsweise über 60g/100g, weiterhin vorzugsweise über 70g/100g, aufweist, und wobei die ersten Füllstoffe (A) länglich geformte Füllstoffpartikel mit einem Aspektverhältnis nach ISO 13322-2:2021 von mindestens 1:3, vorzugsweise von mindestens 1:4, weiterhin vorzugsweise von mindestens 1:5, enthalten.

2. Zusammensetzung nach Anspruch 1,
**dadurch gekennzeichnet, dass** die Pigment-Volumen-Konzentration (PVK) der Zusammensetzung zwischen 40% und 70%, vorzugsweise zwischen 45% und 70%, weiterhin vorzugsweise zwischen 50% und 65% beträgt.

3. Zusammensetzung nach Anspruch 1 oder 2,
**dadurch gekennzeichnet, dass** die ersten Füllstoffe (A) eine Ölzahl nach DIN EN ISO 787-5 aufweisen, die 30 bis 90g/100g, vorzugsweise 35 bis 80g/100g, weiterhin vorzugsweise 40 bis 75g/100g, beträgt.

4. Zusammensetzung nach einem der vorhergehenden Ansprüche,
**dadurch gekennzeichnet, dass** die zweiten Füllstoffe (B) eine Ölzahl nach DIN EN ISO 787-5 aufweisen, die 110 bis 250g/100g, vorzugsweise 110 bis 200g/100g, beträgt.

5. Zusammensetzung nach einem der vorhergehenden Ansprüche,
**dadurch gekennzeichnet, dass** die in den ersten Füllstoffen (A) enthaltenen länglich geformten Füllstoffpartikel einen maximalen Feret-Durchmesser von 40 bis 200 $\mu$m, vorzugsweise von 60 bis 160 $\mu$m, weiterhin vorzugsweise von 80 bis 120 $\mu$m, und einen minimalen Feret-Durchmesser von 4 bis 30 $\mu$m, vorzugsweise von 5 bis 26 $\mu$m, weiterhin vorzugsweise von 6 bis 22 $\mu$m, aufweisen.

6. Zusammensetzung nach Anspruch 5,
**dadurch gekennzeichnet, dass** die darüber hinaus in den ersten Füllstoffen (A) enthaltenen Füllstoffe eine mittlere Partikelgröße (D50) von 1 bis 30 $\mu$m, vorzugsweise von 2 bis 25 $\mu$m, weiterhin vorzugsweise von 3 bis 20 $\mu$m, aufweisen.

7. Zusammensetzung nach einem der vorhergehenden Ansprüche,
**dadurch gekennzeichnet, dass** die zweiten Füllstoffe (B) eine mittlere Partikelgröße (D50) von 5 bis 100 $\mu$m, vorzugsweise von 10 bis 80 $\mu$m, weiterhin vorzugsweise von 12 bis 75 $\mu$m, aufweisen.

8. Zusammensetzung nach einem der vorhergehenden Ansprüche,
**dadurch gekennzeichnet, dass** die Füllstoffkombination karbonatische Füllstoffe und/oder silikatische Füllstoffe als erste Füllstoffe (A) und/oder zweite Füllstoffe (B) enthält.

9. Zusammensetzung nach einem der vorhergehenden Ansprüche,
**dadurch gekennzeichnet, dass** die zweiten Füllstoffe (B) der Füllstoffkombination mindestens ein anorganisches Mattierungsmittel enthalten.

10. Zusammensetzung nach einem der vorhergehenden Ansprüche,
**dadurch gekennzeichnet, dass** die Zusammensetzung 4,0 bis 35,0 Gew.-%, vorzugsweise 6,0 bis 28,0 Gew.-%, weiterhin vorzugsweise 8,0 bis 22,0 Gew.- % an ersten Füllstoffen (A) und 1,0 bis 25,0 Gew.-%, vorzugsweise 2,0 bis 20,0 Gew.-%, weiterhin vorzugsweise 4,0 bis 15,0 Gew.-% an zweiten Füllstoffen (B), jeweils bezogen auf das Gesamtgewicht der Ausgangsstoffe enthält.

11. Zusammensetzung nach einem der vorhergehenden Ansprüche,
**dadurch gekennzeichnet, dass** von den enthaltenen ersten Füllstoffen (A) 2 bis 15 Gew.-%, vorzugsweise 3 bis 12 Gew.-%, weiterhin vorzugsweise 4 bis 10 Gew.-% bezogen auf das Gesamtgewicht der Ausgangsstoffe länglich geformte Füllstoffpartikel mit einem Aspektverhältnis von mindestens 1:3, vorzugsweise von mindestens 1:4, weiterhin vorzugsweise von mindestens 1:5, sind.

**12.** Zusammensetzung nach einem der vorhergehenden Ansprüche,
**dadurch gekennzeichnet, dass** die Zusammensetzung 4,0 bis 20,0 Gew.-%, vorzugsweise 5,0 bis 18,0 Gew.-%, weiterhin vorzugsweise 6,0 bis 15,0 Gew.- %, organisches Polymerbindemittel bezogen auf das Gesamtgewicht der Ausgangsstoffe enthält.

**13.** Zusammensetzung nach einem der vorhergehenden Ansprüche,
**dadurch gekennzeichnet, dass** die Zusammensetzung mindestens ein organisches Polymerbindemittel auf Basis von Vinylacetat/EthylenCopolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate, umfassend Homo- oder Copolymere von Acrylaten und/oder Methacrylaten, gegebenenfalls mit Acryl- und/oder Methacrylsäure als Comonomerbaustein, enthält.

**14.** Zusammensetzung nach einem der vorhergehenden Ansprüche,
**dadurch gekennzeichnet, dass** das mindestens eine organische Polymerbindemittel eine wässrige Polymerdispersion mit einem Feststoffanteil von 30-65 Gew.-%, vorzugsweise 40-62 Gew.-%, weiterhin vorzugsweise 45-625 Gew.-% bezogen auf das Gesamtgewicht der Polymerdispersion ist.

**15.** Zusammensetzung nach einem der vorhergehenden Ansprüche,
**dadurch gekennzeichnet, dass** die Zusammensetzung rheologische Additive, Verdicker, Topf- und Filmkonservierungsmittel, Biozide, Entschäumer, Netz- und Dispergiermittel und/oder pH-Einsteller als Additive enthält.

**16.** Zusammensetzung nach einem der vorhergehenden Ansprüche,
**dadurch gekennzeichnet, dass**

| | |
|---|---|
| 4-20 Gew.-% | organisches Polymerbindemittel (Feststoffanteil) |
| 4-35 Gew.-% | erste Füllstoffe (A) mit einer Ölzahl < 100, von denen mindestens 50% länglich geformte Füllstoffpartikel mit einem Aspektverhältnis von mindestens 1:3 sind, |
| 1-25 Gew.-% | zweite Füllstoffe (B) mit einer Ölzahl > 100g/100g |
| 1-25 Gew.-% | Weiß- und/oder Farbpigmente |
| 0,01-5,0 Gew.-% | weitere Additive |
| 20-60 Gew.-% | Wasser |

jeweils bezogen auf das Gesamtgewicht der Ausgangsstoffe enthalten sind.

**17.** Beschichtung, insbesondere Farbbeschichtung, aus einer Zusammensetzung nach einem der vorhergehenden Ansprüche, wobei die Beschichtung eine Nassabriebfestigkeit der Klasse 1 und/oder einen Glanzgrad < 10 GU, vorzugsweise < 8 GU, weiterhin vorzugsweise ≤ 7 GU, aufweist.

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/140694 A1 (GAGE LAURA [US] ET AL) 7. Mai 2020 (2020-05-07) <br> * Absatz [0015] - Absatz [0031] * <br> * Absatz [0042] - Absatz [0098] * <br> * Absatz [0176] - Absatz [0198] * <br> * Zusammenfassung; Ansprüche 1-46; Tabellen 1-4 * <br> - - - - - | 1-17 | INV. <br> C09D5/02 |
| X | WO 2007/141115 A2 (DEGUSSA [DE]; WENNING ANDREAS [DE]; LOEST DIETMAR [DE]) 13. Dezember 2007 (2007-12-13) <br> * Seite 3, Zeile 30 - Seite 5, Zeile 16 * <br> * Zusammenfassung; Ansprüche 1-27; Tabellen 1, 2 * <br> - - - - - | 1-17 | |
| X | WO 2006/056644 A1 (TIKKURILA OY [FI]; FRERA LAURA [IT]) 1. Juni 2006 (2006-06-01) <br> * Seite 2, Zeile 7 - Seite 5, Zeile 2 * <br> * Zusammenfassung; Ansprüche 1-47 * <br> - - - - - | 1-17 | |
| X | EP 0 928 819 A1 (ARMSTRONG WORLD IND INC [US]) 14. Juli 1999 (1999-07-14) <br> * Absatz [0006] - Absatz [0023] * <br> * Zusammenfassung; Ansprüche 1-16; Beispiele 1-8 * <br> - - - - - | 1-17 | **RECHERCHIERTE SACHGEBIETE (IPC)** <br><br> C09D |
| X | CN 115 011 191 A (GUANGDONG CARPOLY SCIENCE & TECH MATERIAL CO LTD) 6. September 2022 (2022-09-06) <br> * Zusammenfassung; Ansprüche 1-10; Beispiele 1-4; Tabellen 1, 2 * <br> - - - - - | 1-17 | |

Der vorliegende Recherchenbericht wurde für alle Patentansprüche erstellt

| Recherchenort | Abschlußdatum der Recherche | Prüfer |
|---|---|---|
| München | 3. September 2024 | Glomm, Bernhard |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 1169

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2024

| Im Recherchenbericht angeführtes Patentdokument | Datum der Veröffentlichung | Mitglied(er) der Patentfamilie | Datum der Veröffentlichung |
|---|---|---|---|
| US 2020140694 A1 | 07-05-2020 | BR 112021008724 A2 | 03-08-2021 |
| | | CA 3115405 A1 | 14-05-2020 |
| | | CN 113166561 A | 23-07-2021 |
| | | EP 3877470 A1 | 15-09-2021 |
| | | JP 2022512864 A | 07-02-2022 |
| | | JP 2024112983 A | 21-08-2024 |
| | | KR 20210072044 A | 16-06-2021 |
| | | US 2020140694 A1 | 07-05-2020 |
| | | WO 2020096904 A1 | 14-05-2020 |
| WO 2007141115 A2 | 13-12-2007 | CN 101085899 A | 12-12-2007 |
| | | DE 102006026759 A1 | 10-01-2008 |
| | | WO 2007141115 A2 | 13-12-2007 |
| WO 2006056644 A1 | 01-06-2006 | AT E444997 T1 | 15-10-2009 |
| | | EA 200701125 A1 | 28-12-2007 |
| | | EP 1819783 A1 | 22-08-2007 |
| | | FI 20041513 A | 25-05-2006 |
| | | PL 1819783 T3 | 31-03-2010 |
| | | WO 2006056644 A1 | 01-06-2006 |
| EP 0928819 A1 | 14-07-1999 | AR 012774 A1 | 08-11-2000 |
| | | BR 9900018 A | 14-12-1999 |
| | | CA 2257713 A1 | 09-07-1999 |
| | | EP 0928819 A1 | 14-07-1999 |
| | | US 6103360 A | 15-08-2000 |
| CN 115011191 A | 06-09-2022 | KEINE | |

EPO FORM P0461

Für nähere Einzelheiten zu diesem Anhang : siehe Amtsblatt des Europäischen Patentamts, Nr.12/82